(19) Europäisches Patentamt
European Patent Office
Office européen des brevets

(11) **EP 2 999 281 B1**

(12) **EUROPEAN PATENT SPECIFICATION**

(45) Date of publication and mention
of the grant of the patent:
**27.12.2017 Bulletin 2017/52**

(51) Int Cl.:
***H04W 72/00*** (2009.01)

(21) Application number: **14185643.5**

(22) Date of filing: **19.09.2014**

(54) **A method for allocating radio resources for cellular broadcasting and associated broadcast cellular system**

Verfahren zur Zuweisung von Funkressourcen für zellulares Senden und zugehöriges zellulares Sendesystem

Procédé pour attribuer des ressources radio de diffusion cellulaire et système cellulaire radiodiffusé associé

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**23.03.2016 Bulletin 2016/12**

(73) Proprietor: **ALCATEL LUCENT**
**92100 Boulogne-Billancourt (FR)**

(72) Inventor: **Chen, Chung Shue**
**91620 Nozay (FR)**

(74) Representative: **Berthier, Karine et al**
**Alcatel-Lucent International**
**Patent Business**
**Site Nokia Paris Saclay**
**Route de Villejust**
**91620 Nozay (FR)**

(56) References cited:
**WO-A1-2008/079222      US-A1- 2004 229 572**
**US-A1- 2006 293 074**

**Description**

**FIELD OF THE INVENTION**

The present invention relates to a method and a broadcast cellular system for allocating radio resources.

**BACKGROUND OF THE INVENTION**

The realm of telecommunication has evolved drastically for the last decades, driven by new technologies and new habits of consumers. Mobile communication networks have evolved to match the never ending increase of content request. Interactions between cellular systems and user's equipments have gone from dedicated communication channel architecture like Global System for Mobile Communications (GSM) standard to shared communication channel architecture such as High Speed Downlink Packet Access (HSDPA) standard, which allows an improved use of radio resources. In case the same content is to be delivered to multiple end users, broadcasting techniques also provide mutualization of wireless resources. Some broadcasting techniques can be combined with shared communication channel architecture. In such case per-user communications are mixed with broadcast transmission, it is then needed to have a fine allocation of the available radio resources. In traditional wireless broadcast techniques, Automatic Repeat Request (ARQ) is used for sending packets, allowing retransmitting a packet from content to be delivered, wherein said packet was not received properly by one or more end users. Whilst ARQ ensures delivery of all packets comprised in the content to be delivered, a shortcoming of ARQ relies on the retransmission of packets that may have been already correctly received by some users. ARQ cannot ensure an optimal use of radio resources, and in particular when broadcasting is targeting user's equipment in very different radio conditions, for example some being located close to the radio source, and others being located far from the radio source. Another drawback of ARQ is the required feedback from user's equipment for indicating that they have not received correctly a fragment of the content to be delivered, requesting then ARQ to retransmit missing fragment. High number of connected user's equipment is traduced by a high amount of feedback that also consumes radio resources. One root cause of a failed broadcasted data packet, needing then ARQ, is a maladjusted broadcast transmit power. In case the broadcast transmit power is too low, user's equipments located far from the radio source are likely to fail receiving high broadcast transmit power may improve the broadcast coverage but at the expenses of high energy consumption. In practice, broadcast systems are usually configured with maximum broadcast transmit power for dealing with the worst case scenario. Said maximum broadcast transmit power is systematically used for any available broadcasting slot and for any user's equipments registered to the broadcasting service. High broadcast power is then ineffective in terms of energy consumption. It does not comply with green trends. Systematic transmission in any broadcast slot is also not optimal in terms of radio resources usage. Moreover such approach can generate additional interferences that could degrade other type of transmissions.

It is therefore needed to improve allocation of radio resources. More particularly it is needed to have a flexible broadcast system able to adapt to different constraints, one being to better control the broadcast transmit power.

Document WO 2008/079222 deals with such a background.

**SUMMARY OF THE INVENTION**

The invention aims to remedy all or some of the disadvantages of the above identified prior art and is defined in the appended claims. It particularly proposes ways for allocating radio resources by a broadcast cellular system.

A first aspect of the invention relates then to a method for allocating radio resources by a broadcast cellular system, said broadcast cellular system communicating with a plurality of user equipments, and broadcasting a set of data packets over a set of time slots, said method comprising:

- for each user equipment from the plurality of user equipments,

    ∘ determining a user's context representative of radio conditions experienced by said user equipment,
    ∘ determining from the user's context a transmit power for sending from the broadcast cellular system one data packet from the set of data packets,

- for at least one time slot from the set of time slots,

    ∘ determining an eligible set of user equipments from the plurality of user equipments, user equipments from said eligible set being selected according to their respective transmit powers, said respective transmit powers controlling a broadcast transmit power for the broadcasting cellular system to broadcast in said time slot one data packet from the set of data packet, the broadcast transmit power being greater than or equal to the respective transmit powers from each user equipment from said eligible set,
∘ allocating in said time slot the broadcast transmit power, for broadcasting the one data packet to the eligible set of user equipments.

Thus, thanks to these features, the method allows the allocation of radio resources. For each user equipment, the steps of determining user's contexts and transmit powers enables the method to take into consideration the radio conditions experienced by the user equipments. The determined transmit powers are advantageously adapted for broadcasting one data packet respectively to each user equipment. The determined transmit powers are further used to determine the eligible set of user equipments. Said eligible set of user equipments comprises user equipments UEs selected according to their respective transmit powers, for controlling the broadcast transmit power. Advantageously the broadcast transmit power is determined according to the respective transmit powers required by the user equipments for receiving one data packet. It allows to determine an adapted broadcast transmit power. The step of allocating the radio resources in time slots allows to control over the time slot the determined broadcast transmit power. The method enables a flexible and efficient allocation of radio resources.

According to various embodiments, such method comprises one or more of the features below, which should be considered in any possible technical combinations:

- the step of determining from the user's context the transmit power is determining the transmit power for achieving a signal to noise ratio on the user equipment greater than or equal to a threshold,
- the step of determining the eligible set of user equipments further comprises a step of selecting user equipments from the plurality of user equipments that have respectively received a number of data packets inferior to the total number of data packets comprised in the set of data packets,
- the broadcasting of the set of data packets uses a "Xor" network coding scheme, and/or random linear network coding scheme, and/or deterministic linear network coding scheme,
- the broadcasting from the broadcast cellular system is performed in at least a radio cell comprising the plurality of user equipments,
- the broadcasting from the broadcast cellular system is performed in a plurality of radio cells, the plurality of user equipments being distributed amongst the plurality of radio cells,
- the user's context is determined according to a feedback provided by corresponding user equipment,
- the user's context is determined regularly according to the feedback provided regularly by the user equipment,
- the user's context is determined regularly according to a correlated fading model,
- the step of determining the set of eligible user equipments further comprises a step of minimizing the broadcast transmit power, for broadcasting the one data packet to said eligible set of user equipments,
- the step of minimizing the broadcast transmit power minimizes the broadcast transmit power according to a Context Aware Binary Linear Programming "CABLP" method comprising the following steps:

  ∘ determining a set of constraints comprising:

    ▪ a first constraint related to the number of data packets respectively received by each user equipment from the plurality of user equipments, for determining the eligible set of user equipments,
    ▪ a second constraint related to the ordering of the respective transmit powers from the user equipments from the eligible set of user equipments,

  ∘ determining an ordered weight matrix ω wherein each element of said ordered weight matrix ω is determined according to the third constraint and is representative of respectively two transmit powers from two user equipments from the eligible set of user equipments,
  ∘ determining the minimum broadcast transmit power according to the result of the applying of the first constraint to each element of the ordered weight matrix ω and according to a binary linear programming method.

- the step of minimizing the broadcast transmit power minimizes the broadcast transmit power according to a Context Aware Heuristic "CAH" method comprising the following steps:

  ∘ for each time slot from the set of time slot, determining the eligible set of user equipments,
  ∘ determining a sub-set of time slots from the set of time slots by selecting respective time slots for which the numbers of user of equipments from the determined eligible sets of user equipments are maximum,
  ∘ selecting one time slot from the sub-set of time slots, said one time slot requiring the minimum broadcast transmit power,
  ∘ assigning in said selected one time slot the minimum broadcast transmit power, for controlling the broadcast transmit power.

A second aspect of the invention relates then to a broadcast cellular system for allocating radio resources, said broadcast cellular system communicating with a plurality of user equipments, and broadcasting a set of data packets over a set of time slots, said broadcast cellular system comprising:

- a user's context monitoring module, for monitoring radio conditions experienced by user equipments from the plurality of user equipments,
- a transmit power module, for determining for each user equipment from the plurality of user equipments a respective transmit power for sending from the broadcast cellular system one data packet from the set of data packets,
- a selection module for determining an eligible set of user equipments from the plurality of user equipments, user equipments from said eligible set being selected according to their respective transmit powers, said respective transmit powers controlling a broadcast transmit power for the broadcasting cellular system to broadcast in said time slot one data packet from the set of data packet, the broadcast transmit power being greater than or equal to the respective transmit powers from each user equipment from said eligible set,
- an allocator module for allocating the broadcast transmit power, for broadcasting the one data packet to the eligible set of user equipments in a time slot from the set of time slots.

Thus, thanks to these features, the broadcast cellular system is enabled for allocating radio resources. For each user equipment, the user's context monitoring module and the transmit power module allows the broadcast cellular system to determine user's contexts and transmit powers. The broadcast cellular system is adapted to take into consideration the radio conditions experienced by the user equipments. The transmit power module further cooperates with the selection module for determining the eligible set of user equipments. Said eligible set of user equipments comprises user equipments UEs selected according to their respective transmit powers, for controlling the broadcast transmit power. Advantageously the broadcast transmit power is determined according to the respective transmit powers required by the user equipments for receiving one data packet. It allows the selection module to determine an adapted broadcast transmit power. The allocation module enables the broadcast cellular system to allocate the radio resources in time slots allowing to control over the time slot the determined broadcast transmit power. The broadcast cellular system advantageously performs a flexible and efficient allocation of radio resources.

According to various embodiments, such broadcast cellular system comprises one or more of the features below, which should be considered in any possible technical combinations:

- the broadcast cellular system communicates to the plurality of user equipments, said plurality of user equipments being comprised in at least a radio cell,
- the broadcast cellular system communicates to the plurality of user equipments, said plurality of user equipments being distributed amongst a plurality of radio cells.

**BRIEF DESCRIPTION OF THE FIGURES**

Some embodiments of the present invention are now described, by way of example only, and with reference to the accompanying drawings, in which:

- FIG. 1 is a schematic block diagram of a radio cell managed by a broadcast cellular system according to an embodiment of the invention,
- FIG. 2 is a schematic block diagram of two radio cells managed by another broadcast cellular system according to an embodiment of the invention,
- FIG. 3 is a schematic block diagram of a broadcast cellular system according to an embodiment of the invention,
- FIG. 4 is a schematic block diagram of broadcast formatting according to an embodiment of the invention,
- FIG. 5 is a schematic block diagram of radio resources usable by a broadcast cellular system,
- FIG. 6 is a schematic block diagram of transmit powers managed by a broadcast cellular system according to an embodiment of the invention,
- FIG. 7 is a flowchart showing steps performed in an embodiment of the method according to the invention.
- FIG. 8a is a graph of broadcast energy consumption according to an embodiment of the invention,
- FIG. 8b is another graph of broadcast energy consumption according to an embodiment of the invention,
- FIG. 8c is another graph of broadcast energy consumption according to an embodiment of the invention,

The same reference number represents the same element to the same type of element on all drawings, unless stated otherwise.

**DESCRIPTION OF EMBODIMENTS**

The figures and the following description illustrate a specific exemplary embodiment of the invention. It will thus be appreciated that those skilled in the art will be able to devise various arrangements that, although not explicitly described or shown herein, embody the principles of the invention and are included within the scope of the invention. Furthermore, any examples described herein are intended to aid in understanding the principles of the invention, and are to be construed as being without limitation to such specifically recited examples and conditions. As a result, the invention is not limited to the specific embodiments or examples described below, but by the claims and their equivalents.

In the following description, well-known functions or constructions by the man skilled in the art are not described in detail since they would obscure the invention in unnecessary detail.

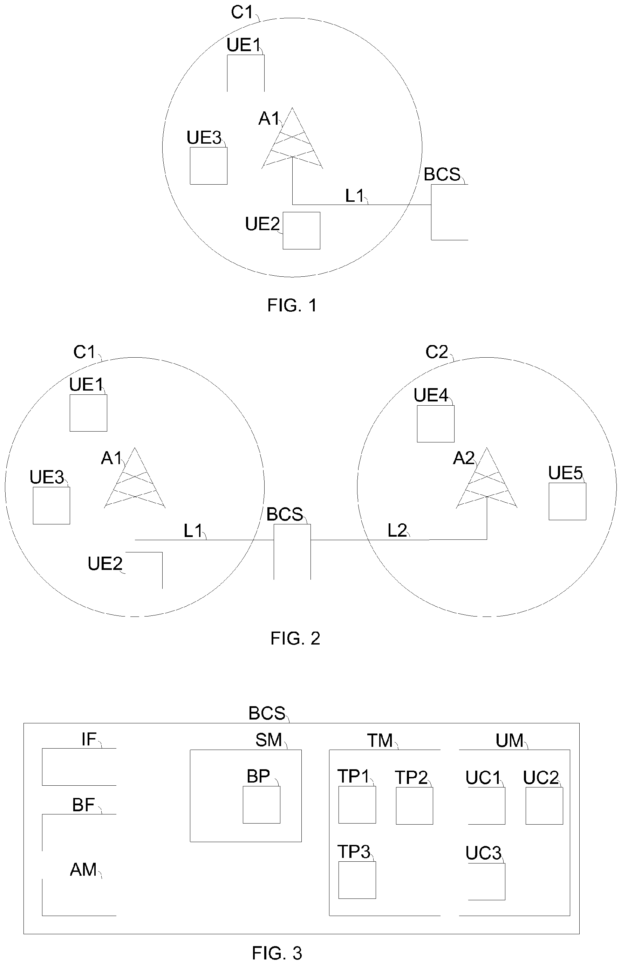

Referring to figure FIG. 1, a schematic block diagram of a radio cell managed by a broadcast cellular system according to an embodiment of the invention is depicted.

A first antenna A1 transmits and receives in an area delimited by a first radio cell C1. A wireless network comprising elements such as Core Network (CN), a mobility management entity (MME), a serving gateway (SGW), a packet gateway (PGW) etc., that are not depicted in figure FIG. 1 are cooperating with the first antenna A1 through a first eNobeB, which is also not depicted in figure FIG. 1. The first antenna A1 is able to emit signals to elements comprised in the first radio cell C1, and to receive signals from said elements. In an example, the first antenna A1 is a Long Term Evolution (LTE) antenna tower, and the first radio cell C1 represents its logical cell coverage. In other examples, the first antenna A1 is comprised in a Wideband Code Division Multiple Access (WCDMA) wireless network or in a Wi-Fi wireless network.

The first radio cell C1 covers a plurality of user equipments UEi such as a first user equipment UE1, a second user equipment UE2 and a third user equipment UE3. In non limiting examples, the first user equipment UE1 is a smartphone operated by a user, the second user equipment is a laptop with wireless connectivity, and the third user equipment UE3 is a connected tablet. Each user equipment from the plurality of user equipments UEi is characterized by its location within the first radio cell 1, its motion like its speed and direction, which impact both its experienced radio conditions. In an example the experienced radio conditions vary as the first user equipment UE1 moves within a block of buildings covered by the first radio cell C1. In an example the experienced radio conditions can be quantified by the signal to noise ratio measured by the first user equipment UE1.

A broadcast cellular system BCS is cooperating with the first antenna A1 through a first link L1. In an embodiment the broadcast cellular system BCS is comprised in the larger wireless network, and provides broadcast services in the first radio cell C1. In another embodiment the broadcast cellular system BCS is separated from the wireless network but is able to cooperate with it. In a non limiting example the broadcast cellular system BCS is adapted to broadcast content according to different wireless standards.

In an example the first link L1 is physical connection between the first antenna A1 and the broadcast cellular system BCS. In another example the first link L1 is a logical link carried over cooperation of various physical links.

For example the broadcast cellular system BCS offers broadcast services such as broadcasting live video stream during a sport event, or in another example broadcasting proximity content such as live information or geolocalized advertisement.

Each user equipment UEi from the plurality of user equipment UEi is registered to broadcast services provided by the broadcast cellular system BCS. In an example they are all registered to the same broadcast service. In another example, the first user equipment UE1 and the third user equipment UE3 are registered to a live video stream whereas the second user equipment UE2 is registered to a live audio stream, both live streams being broadcast services delivered effectively by the first antenna A1 and managed by the broadcast cellular system BCS, that performs broadcasting in the first radio cell C1.

Referring to figure FIG. 2, a schematic block diagram of two radio cells managed by another broadcast cellular system according to an embodiment of the invention is depicted.

As shown in previous figure FIG. 1, the broadcast cellular system BCS manages broadcast services to be transmitted by the first antenna A1. The broadcast cellular system BCS also cooperates with a second antenna A2, through a second link L2. Similarly to the first link L1, the second link L2 may be a physical connection or a logical connection.

A second radio cell C2 is associated to said second antenna A2, and delimiting the area covered by the second antenna A2.

A fourth user equipment UE4 and a fifth user equipment UE5 are comprised in the plurality of user equipments UEi for which the broadcast cellular system BCS delivers broadcast services.

In an embodiment, the broadcast cellular system BCS performs broadcasting in a plurality of radio cells Ci. Said broadcast cellular system BCS is adapted to manage registered user equipments UEi that are distributed amongst several radio cells Ci comprised in the plurality of radio cells Ci.

Referring to figure FIG. 3, a schematic block diagram of a broadcast cellular system according to an embodiment of the invention is depicted.

The broadcast cellular system BCS comprises an interface module IF. Said interface module IF cooperates with the first link L1 and the second link L2, for delivering broadcast packets to be transmitted by the respective first antenna A1 and second antenna A2. Not depicted on figure FIG. 3, the interface module IF is also able to cooperated with content delivery architecture, for retrieving content to be broadcasted, and with wireless network, for interacting with network services from the core network or the mobility management entity in examples.

The broadcast cellular system BCS comprises a user's context monitoring module UM. Said user's context monitoring UM is adapted to process information relative to the radio conditions experienced by a user equipment UEi, that may depend for example from the context wherein said user equipment UEi is located. For each user equipment UEi from the plurality of user equipments UEi, the user's context monitoring UM determines a user's context UCi which is representative of the radio conditions experienced by said user equipment UEi. In an example the user's context monitoring module determines a first user's context UC1 associated to the first user equipment UE1, a second user's context UC2 associated to the second user equipment UC2, and a third user's context UC3 associated to the third user equipment UE3. In an example, the user's context monitoring module UM is able to cooperate with the wireless network for retrieving Channel State Information (CSI) that is reported by the first equipment UE1 to the wireless network. From said CSI, the user's context monitoring module UM is able to evaluate the context of the associated first user equipment UE1 and to determine the first user's context UC1.

The broadcast cellular system BCS a transmit power module TM. Said transmit power module TM is adapted to cooperate with the user's context monitoring module UM for further processing the determined user's contexts UCi. From said determined user's contexts UCi, the transmit power module TM is able to determine the respective transmit powers TPi required for each user equipment UEi for the broadcast cellular system BCS to broadcast or send a data packet, through its cooperation with the first antenna A1. In an example the transmit power module TM determines a first transmit power TP1 associated to the first user equipment UE1, a second transmit power TP2 associated to the second user equipment UE2 and a third transmit power TP3 associated to the third user equipment UE3.

In an embodiment, the transmit power module TM is adapted to determine respective transmit powers TPi for achieving a signal to noise ratio on the respective user equipments UEi, said signal to noise ratio being greater than or equal to a threshold. In an example, the first user equipment UE1 currently observes a 1dB signal to noise ratio for the signals received from the first antenna A1 and managed by the wireless network. For correctly decoding a broadcast data packet, the first user equipment UE1 requires that the broadcasted signals, comprising parts of a data packet from a content to be broadcasted, achieve a signal to noise ratio greater than the threshold set to 3dB. Signal to noise ratio below the 3dB threshold reduces the probability of a successful decoding as for example the decoder engine comprised in the first user equipment UE1 is not efficient enough. Therefore the transmit power module TM takes into account the 3dB threshold for determining the required transmit power TP1 that corresponds to a transmit power that achieves a signal to noise ratio greater than or equal than 3dB as experienced by the first user equipment UE1. It should be noted that the threshold might be the same for all user equipments UEi but it could be different from a user equipment UEi to another one depending on the subscribed broadcast services. It should be noted also that for a given threshold applicable to different user equipments UEi, each determined transmit power TPi is likely to be different as each user equipment UEi may be experiencing different radio conditions.

The broadcast cellular system BCS further comprises a selection module SM. The selection module SM is adapted to determine an eligible set of user equipments UEi, by selecting user equipments from the plurality of user equipments UEi according to their respective determined transmit powers TPi. It is meant by the term "eligible set of user equipments", that the user equipments from said eligible set are eligible to be transmitted a data packet by the broadcast cellular system, the eligibility being dependent on criteria.

The selected user equipments UEi, that are comprised in the eligible set of user equipment UEi are associated with respective transmit powers TPi that allow controlling a broadcast transmit power BP. The broadcast transmit power BP is the transmit power emitted by the first antenna A1 as configured by the broadcast cellular system BCS, for broadcasting data packets. In an example, the selection module SM selects user equipments UEi for which determined transmit powers TPi are below a maximum, said selected user equipments UEi belonging to the eligible set of user equipments UEi, and controlling the broadcast transmit power BP by setting it to the highest transmit power TPi from the eligible set of user equipments UEi. It should be noted in such case that the determined transmit powers TPi that are below the highest transmit power TPi are encompassed by the broadcast transmit power BP.

In an embodiment, the selection module SM is adapted to determine the set of eligible user equipments UEi, by selecting user equipments UEi which respective transmit powers TPi minimize the broadcast transmit power BP. It is meant by minimize the broadcast transmit power BP, that the selection module SM is adapted to select the appropriate user equipments UEi, in order to use a minimal broadcast transmit power BP for broadcasting a data packet. Advantageously the selection module SM considers the entire set of data packets to be broadcasted over a time duration, and aims to minimize the broadcast transmit power BP over said time duration. Broadcast transmit power minimization methods will be described later on.

The broadcast cellular system BCS further comprises an allocator module AM. The allocator module AM is in charge of allocating the radio resources available for broadcasting. The allocation is at least a two dimension allocation. For the first dimension, the allocator module allocates resources elements such as frequencies in a GSM or LTE wireless network, and such as Orthogonal Variable Spreading Factor (OVSF) in HSDPA type of wireless network. Said resources elements comprise the broadcast transmit power BP. For the second dimension, the allocator module allocates time resources. In an example, the broadcast cellular system BCS is being assigned by the wireless network with a set of frequencies for broadcast, and a time duration comprising slots of transmission. The broadcast cellular system BCS has then to efficiently use the frequencies by adapting the broadcast transmit power BP according to the eligible set of user equipments UEi and to spread the content to be broadcasted amongst the assigned transmission slot. The allocator module AM performs such dispatching of resources by cooperating with the transmit power module TM and the selection module SM. In an embodiment, the allocator module AM assigns on transmission slot basis, the eligible set of user equipments UEi for which the broadcast cellular system broadcasts data packets.

The broadcast cellular system BCS further comprises a broadcast formatter module BF. The broadcast formatter module BF is in charge of processing a content to be broadcasted into data packets adapted to wireless network typically using transmission slots for delivering packets.

In an embodiment, the broadcast cellular system BCS is a network element comprised in the wireless network. In another embodiment the broadcast cellular system BCS is comprised in one of the network element of the wireless network, for example in the eNodeB or in the MME.

In an embodiment the broadcast cellular system BCS is a centralized device. In another embodiment the broadcast cellular system BCS is distributed within the network element of the wireless network.

In an embodiment, the modules comprised in the broadcast cellular system BCS, such as the interface module, the user's context monitoring module, the selection module SM etc, are combination of software services executed by hardware.

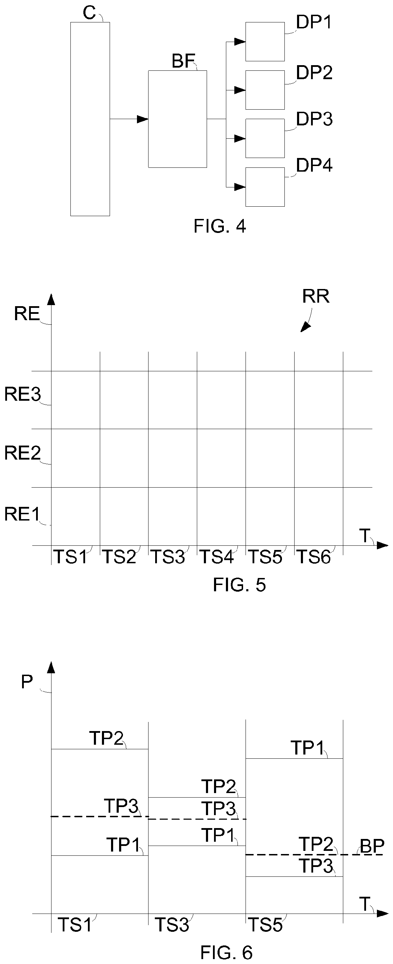

Referring to figure FIG. 4 a schematic block diagram of broadcast formatter according to an embodiment of the invention is depicted.

A content C is to be delivered to the plurality of user equipments UEi by the broadcast cellular system BCS, said content C is to be delivered over a given duration time. The broadcast formatter BF processes the content C to form a set of data packets DPk. In an example, the content C is packetized into a first data packet DP1, a second data packet DP2, a third data packet DP3 and a fourth data packet DP4. The set of data packets DPk may comprise data packets that are simple fragments of the content C, including an included redundancy check in an example.

In an embodiment, the broadcast formatter BF is adapted to perform network coding techniques. Such network coding techniques are advantageous for reducing the number of retransmissions of data packets DPk through ARQ mechanism by improving the spreading of information within the set of data packets DPk. In a non limiting example, the broadcast formatter forms the set of data packets DPk using a "Xor" network coding scheme. In another non limiting example, the broadcast formatter is adapted to perform random linear network coding scheme for segmenting the content C into the set of data packets DPk. In yet another example, the broadcast formatter BF uses a deterministic linear network coding scheme for forming the set of data packets DPk.

Referring to figure FIG. 5, a schematic block diagram of radio resources usable by a broadcast cellular system is depicted.

Radio resources RR are depicted as a grid according to typical wireless network. On the y-axis, a resource elements axis RE references the available resource elements REi. In a non limiting example, a firs resource element RE1, a second resource element RE2 and a third resource element RE3 are resource elements from the wireless network. Said wireless network assigns to the broadcast cellular system BCS some of these resources elements for broadcasting purpose. On the x-axis, a time axis T references transmission slots or time slots TSj such as a first time slot TS1, a second time slot TS2, a third time slot TS3, a fourth time slot TS4, a fifth time slot TS5 and a sixth time slot TS6. Said time slots are allocated by the wireless network to the broadcast cellular system BCS. In an example the broadcast cellular system BCS is being assigned with the set of time slots TSj comprising the first time slot TS1, the third time slot TS3 and the fifth time slot TS5. The allocator module AM is responsible to allocate the available radio resources RR amongst the plurality of user equipments UEi.

Referring to figure FIG. 6, a schematic block diagram of transmit powers managed by a broadcast cellular system according to an embodiment of the invention is depicted.

The transmit power module TM determines the respective transmit powers TPi of the plurality of user equipments UEi. Said user equipments UEi are experiencing varying radio conditions over time, therefore the transmit power module TM determines regularly the respective transmit powers TPi.

By the terms "regularly" and "regular" combined with the term "determine" or others terms, it is meant that the action, for example of determining but not limited to this action, is performed multiple time over time. In an example, it is meant by regular determining or regular selecting, that over the time slots TSj, the actions of determining or selecting are repeated.

In an embodiment, the user equipments UEi from the plurality of user equipments UEi provides regularly feedbacks to the wireless network, each feedback comprising respectively indications related to the radio conditions it experiences. In an example, the plurality of user equipments reports regularly CSI to the wireless network that are further transmitted to the broadcast cellular system BCS. Said regular CSI reports are then used by the user's content monitoring module UM to regularly determine the respective user's contexts UCi. From these regularly updated user's contexts UCi, the transmit power module TM is enabled to determine regularly the respective transmit powers TPi. It advantageously allows the broadcast cellular system BCS to adapt the broadcast to the ongoing radio conditions experienced by the user equipments UEi.

In another embodiment, the user equipments UEi from the plurality of user equipments UEi provide only sporadically feedbacks to the wireless network. For example the broadcast cellular system BCS is informed by the wireless network only at connection time of the radio conditions experienced by one of the user equipment UEi. Such case may happen for limiting the signaling aspect of feedback reports for saving bandwidth. The broadcast cellular system BCS is adapted to use one reported feedback and then to determine regularly the respective user's context UCi according to a correlated fading model, which will be described later on.

The regular determination of the respective user's contexts UCi allows the regular determination of the respective transmit powers TPi, required by their associated user equipments UEi to received the broadcasting from the broadcast cellular system BCS. The selection module SM selects user equipments UEi for forming the set of eligible user equipments UEi, said set of eligible user equipments controlling the broadcast transmit power BP. In an example, the broadcast transmit power BP is depicted with a dotted line on figure FIG. 2. On the first time slot TS1, the second transmit power TP2 is determined as being too high for broadcasting one data packet DPk from the set of data packet DPk. For example, the determined second transmit power TP2 is above the maximum allowable transmit power at the first antenna A1. Therefore the broadcast transmit power BP is controlled for being set equal to the third transmit power TP3, in order for the broadcasted data packet to reach the third user equipment UE3. It should be noted that the first transmit power TP1 is below the third transmit power TP3, then it is advantageous to include the first user equipment UE1 in the set of eligible user equipments UEi. In the third time slot TS3, in a similar way, the broadcast transmit power BP is set equal to the third transmit power BP3, which is higher than the first transmit power TP1, but still lower than the second transmit power TP2. Variation of transmit powers TPi between the first time slot TS1 and the third time slot TS3 may be due to varying radio conditions in an example. In the fifth time slot TS5, the second transmit power TP2 is lower than previously and higher than the third transmit power TP3. The first transmit power TP1 is determined to be a high transmit power therefore not applicable to be encompassed by the broadcast transmit power BP. Said broadcast transmit power BP is then set to the second transmit power BP. Examples of determination of the broadcast transmit power BP are described later on.

For at least one time slot TSj from the set of time slots TSj that comprises the first time slot TS1, the third time slot TS3 and fifth time slot TS5, the broadcast transmit power BP has been determined according to the set of eligible user equipments UEi, whose transmit power TPi allows controlling said broadcast transmit power BP. The allocator module AM can then allocate the radio resources RR for an efficient broadcasting.

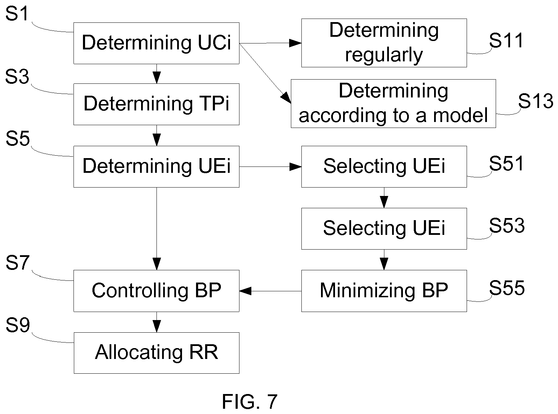

Referring to figure FIG. 7, a flowchart showing steps performed in an embodiment of the method according to the invention is depicted.

In the step S1, the respective user's context UCi from the plurality of user equipments UEi are determined and are representative of the radio conditions experienced by said user equipment UEi.

In an embodiment, in the step S11, the respective user's contexts UCi are determined regularly according to regular feedbacks provided by the user equipments UEi.

In another embodiment, in the step S13, the respective user's contexts UCi are determined regularly according to the correlated fading model. Said correlated fading model advantageously uses an initial radio conditions input and then evaluates the evolution of the radio conditions according to said model. It allows reducing the reporting of feedbacks by the user equipments UEi. In an example the correlated fading model is a correlated shadow fading model. Other kind of correlated fading model can be used in other examples.

In the step S3, the respective transmit powers TPi are determined from the respective user's context UCi. The transmit powers TPi are determined with the aim for the user equipments UEi from the plurality of user equipments UEi to receive one data packet DPk from the set of data packets DPk to be broadcasted by the broadcast cellular system BCS.

In the step S5, for at least one time slot TSj from the set of time slots TSj, the eligible set of user equipments UEi is determined. The user equipments UEi from said eligible set are selected from the plurality of user equipments UEi according to their respective transmit powers TPi. The selection is performed in the step S51 and based on the respective transmit powers TPi. Said selected respective transmit powers TPi allows controlling the broadcast transmit power BP, in the step S7, for broadcasting one data packet DPk from the set of data packets DPk in the current time slot TSj. The broadcast transmit power BP is determined to be greater than or equal to the respective transmit powers TPi from the user equipments UEi from the set of eligible user equipments UEi.

In an embodiment, in the step S53, the eligible set of user equipments UEi is determined from the plurality of user equipments UEi according to the received data packets DPk from the set of data packets DPk. For example, after some time slots TSj, one of the user equipment UEi from the plurality may have correctly received and successfully decoded all the data packets DPk from the set of data packets DPk. In such case it is not necessary to consider said user equipment UEi for next available time slots TSj for broadcasting. Only the user equipments UEi from the plurality of user equipments UEi that have received a number of data packets DPk inferior to the number of data packets DPk from the set of data packets DPk are considered in the determination of the eligible set of user equipments UEi.

In an embodiment, in the step S55, the user equipments UEi from the eligible set of user equipments UEi are selected for minimizing the broadcast transmit power BP. Said step S55 of minimizing is performed on each time slot TSj from the set of time slots TSj. In an example the selection module SM evaluates for each time slot TSj, each respective transmit powers TPi, and then distributes the user equipments UEi amongst all the available time slots TSj according to the broadcast transmit power BP minimization constraint. It advantageously offers an optimal use of the radio resources available for broadcasting.

In the step S9, radio resources are allocated. The determined eligible sets of user equipments UEi are assigned to their respective time slot TSj. Each data packet DPk considered in each time slot TSj to be broadcasted is assigned in said time slot TSj. The determined broadcast transmit power BP is allocated to the corresponding time slot TSj.

In an embodiment, the respective transmit powers TPi from the broadcast cellular system BCS to the respective user equipments UEi are determined from their associated user's contexts UCi. For a given time slot TSj, from the set of time slot TSj, and considering one of the user equipment UEi from the plurality of user equipments UEi, signal to noise ratio (SNR) observes by said user equipment UEi can be written as:

$$SNRi = \frac{Gi * TPi}{Ni}$$

Where:

- SNRi is the signal to noise ratio for user equipment UEi,
- Gi is the link gain of the radio channel established between the user equipment UEi and the first antenna A1,
- Ni is the sum of the noise and interferences power experienced by said user equipment UEi. The value Ni of the sum of the noise and interferences is reported sporadically by the user equipment UEi in an example, or a typical value measured through field testing can be used in another example.

For broadcasting purpose, SNRi is known with respect to the threshold that allows a correct receiving and decoding of a data packet DPk. In an example said threshold is 3dB, constraining SNRi to be greater than or equal to 3dB.

The link gain Gi may be determined regularly from the regular reporting of feedback from the user equipment UEi.

In case the user equipment UEi does not perform a regular report, or is not able to do so, the link gain Gi remains to be determined as follows. In an example related to Third Generation Partnership Project (3GPP) Long Term Evolution (LTE), on a given time slot TSj, the path loss between the first antenna A1 and the user equipment UEi can be modeled as:

$$Path\ Loss = 128.1 + 37.6 log10(Di) + Ls$$

Where:

- Di is the distance between the first antenna A1 and the user equipment UEi,
- Numerical values are obtained from propagation models and parameters such as the duration of the given time slot TSj, for example 0.167 second,
- Ls is the shadow fading of the radio channel.

The link gain Gi from the radio channel is closely linked to the attenuation Ai of the radio channel and to the path loss exponent $\alpha$ as follows:

$$Gi = \frac{(10^{-\frac{Ai}{10}})}{Di^{\alpha}}$$

The attenuation Ai is usually modeled as a zero-mean Gaussian random variable with standard deviation a. In an example such standard deviation σ is comprised in the range 6dB to 12dB, and the path loss exponent is comprised in the range 4 to 6. In an example the shadowing fading statistics in the first cell C1 are collected by the wireless network and provided to the broadcast cellular system BCS.

In an example the correlated fading model is a correlated shadow fading model. Considering the spatial correlation of shadow fading, the correlated shadow fading is modeled as the following Gauss-Markov process, for a given time slot TSj:

$$Ai' = \rho i * Ai + (1 - \rho i^2)^{\frac{1}{2}} * W$$

Where:

- Ai' is the attenuation for the next time slot TSj,
- W is a zero-mean Gaussian random variable. In an example the standard deviation of W is 10dB,
- pi is the correlation coefficient.

The correlation coefficient pi can be written as follows:

$$\rho i = \exp(-\frac{|\Delta D|}{Dcor})$$

Where:

- |ΔD| is the position change of the user equipment UEi between two successive time slot TSj,
- Dcor is the correlation distance. In an example the correlation distance is chosen to be 50m.

The broadcast cellular system BCS uses an initial value reported by the user equipment UEi through the wireless network for estimating a first link gain Gi value. The broadcast cellular system BCS also uses inputs from the wireless network regarding the motion of said user equipment UEi, said motion being estimated thanks to signals received from the user equipment UEi in an example. These inputs enable the broadcast cellular system to determine the correlation coefficient on a time slot basis. The determined correlation coefficient is then used along the determined first attenuation Ai value, obtained from the first link gain Gi, for determining the next value of the attenuation Ai on the next slot. The correlated shadow fading model allows then advantageously regular determining the link gain Gi which is further used to determine regularly the user's context UCi.

In an embodiment, the user equipments UEi from the eligible set of user equipments UEi are selected for minimizing the broadcast transmit power BP.

The minimum transmit power TPi for the broadcast cellular system BCS to broadcast a data packet DPk to the user equipment UEi is the transmit power TPi that achieves at least the signal to noise ratio SNRi equal to the threshold. The transmit power TPi can be written as follows for a given time slot TSj:

$$TPi = \frac{\gamma * Ni}{Gi}$$

Where γ is the threshold for correctly receiving and decoding a data packet DPk on the user equipment UEi.

Considering the set of time slots TSj, a matrix Λ can be defined, each element of the matrix comprising the corresponding value of TPi, the matrix Λ comprising KxT elements, where T is the number elements in the set of time slots TSj, and K is the number of elements in the plurality of user equipments UEi.

A matrix X is defined as a KxT binary matrix, each element of the matrix X indicating if corresponding user equipment UEi, in corresponding time slot TSj is a target for being broadcasted a data packet DPk from the set of data packet DPk. For example, value 1 at column 2, line 3 from the matrix X indicates that the user equipment UE2 is a target for data packet DPk in time slot TS3.

For minimizing the broadcast transmit power BP, a set of constraints can be established:

- each user equipment UEi has to receive all the data packets comprised in the set of data packets DPk,

- the broadcast transmit power BP cannot exceed the maximum allowable transmit power by the first antenna A,
- if a user equipment UEi is a target for broadcasting at a given time slot, the other user equipments UEi' requiring a smaller transmit power TPi' are targets for broadcasting as well.

Therefore for minimizing the broadcast transmit power BP, the constraints can be written as:

$$Minimize \sum_{j=1}^{T} \max\{\Lambda_{ij}X_{ij}\} \text{ for } 1 \leq i \leq K$$

Where :

- index i is relative to user equipments UEi,
- index j is relative to time slot TSj.

In an embodiment, the minimization of the broadcast transmit power BP uses a Context Aware Binary Linear Programming CABLP method which is described hereinafter.

The above minimization formulation is subject to the following set of constraints:

- a first constraint: $\sum_{j=1}^{T} X_{ij} \geq M$ for $1 \leq i \leq K$ where M is the number of elements in the set of data packets DPk.

  Such constraint depicts the constraint on number of data packet DPk to be received,

- a second constraint: $X_{ij} \leq X_{ij}'$ if $\Lambda_{ij} \geq \Lambda_{ij}'$ which depicts the constraint on ordering the user equipments having a lower transmit power TPi than a targeted user equipment.

Additionally a third constraint can be defined:

- a third constraint: $X_{ij} = 0$ if $\Lambda_{ij} > Pmax$ which depicts the constraint that the transmit powers TPi cannot exceed the maximum transmit power Pmax from the first antenna A1,

The set of constraints being determined, the minimization is transformed into a binary linear programming (BLP) problem as follows. First, sort the j-th column of matrix $\Lambda$ in ascending order, where $1 \leq j \leq T$, and get a new sequence $(\Lambda_{m1j}, \Lambda_{m2j}, ..., \Lambda_{mKj})$, where $\Lambda_{mij}$ is always no greater than $\Lambda_{m(i+1)j}$, which means that, considering the eligible set of user equipments (UEi), if user equipment UEm(i+1) is covered by the broadcast cellular system BCS, then the user corresponding to user equipment UEmi must be covered by broadcast cellular system BCS as well. Let $\omega$ be an ordered weight matrix with dimensions KxT. The value of each element in $\omega$ is determined as follows:

- $\omega_{ij} = \Lambda_{ij}$ if i = m1
- $\omega_{ij} = \Lambda_{mkj} - \Lambda_{m(k-1)j}$ if i = mk, k>1

The minimization system can be then formulated as determining the binary matrix X that:

$$Minimize \; sum(X \circ \omega)$$

Where the notation ' $\circ$ ' denotes the element-wise Hadamard product, and sum() means the summation of all the elements in the resulting matrix of the Hadamard product.

And wherein the above minimization formulation is subject to the following constraints:

- $X_{ij} = 0$ or 1,
- $X_{ij} = 0$ if $\Lambda_{ij} > Pmax,$
- $\sum_{j=1}^{T} X_{ij} \geq M \; \forall i ,$
- $X_{mij} \geq X_{m(i+1)j}, \; \forall j, 1 \leq i \leq K - 1$

This minimization formulation is a binary linear programming formulation which can be solved by mathematic tools known from the art. The result provides by this minimization formulation is the minimum possible broadcast transmit power BP as controlled by the selected respective transmit powers TPi. The broadcast power BP is minimized according to the Context Aware Binary Linear Programming method, which offers advantageously an optimal resolution of the minimization formulation. Said optimal resolution allows the broadcast transmit power to be adapted on a time slot basis, taking into account the context of the user equipments UEi enlisted in the broadcast service. The optimal resolution allows a fine tuning of the radio resources RR.

In an embodiment, the minimization of the broadcast transmit power BP uses a Context Aware Binary Heuristic (CAH) method.

In such method, the time slots TSj are filled with the maximum number of user equipments UEi that still have not received all the data packets DPk from the set of data packets DPk. In an example, the Context Aware Binary Heuristic method comprises the following steps:

- a matrix G of dimensions KxT is defined to indicate whether a user equipment UEi, with remaining data packets DPk to be received, can be targeted by the broadcast cellular system BCS. The elements $G_{ij}$ of the matrix G are initialized with 0 value for $\Lambda_{ij} > Pmax,$ and with value 1 otherwise,
- perform the sum of each column from matrix G, for determining the number of remaining user equipments UEi for each time slot TSj, and selects the time slots TSj that have the maximum number of remaining user equipments UEi,
- for each selected time slot TSj, determine the corresponding overall transmit power required in said time slot TSj given by max$\{ G_{ij}\Lambda_{ij}\}$ *for* $1 \le i \le K,$ and then selects the time slot TSj' that requires the minimum overall transmit power within the set of previously selected time slots TSj, and set or assign the broadcast transmit power BP in said time slot TSj' equal to the said minimum overall transmit power,
- update the matrix G by setting the elements $M_{ij'}$ to 0 value for i varying from 1 to K, as the time slot TSj' has been selected, it cannot be considered any more,
- repeat the previous steps, apart from the step of initializing the matrix G, until all the user equipments UEi from the plurality of user equipments UEi are scheduled to receive all the data packets DPk from the set of data packets.

The Context Aware Heuristic method advantageously converges after some iteration of the above sequence of steps. In an example the overall complexity of the Context Aware Heuristic method is O(KxT). Said method offers less optimal minimization of the broadcast transmit power BP than the Context Aware Binary Linear Programming method, but offers simpler execution steps. The context aware heuristic CAH method allows the broadcast transmit power to be determined on a time slot basis and considering the context from each user equipments UEi waiting for receiving broadcasted data packets DPi. The context aware heuristic CAH method enables a practical and low complexity assignment of radio resources RR.

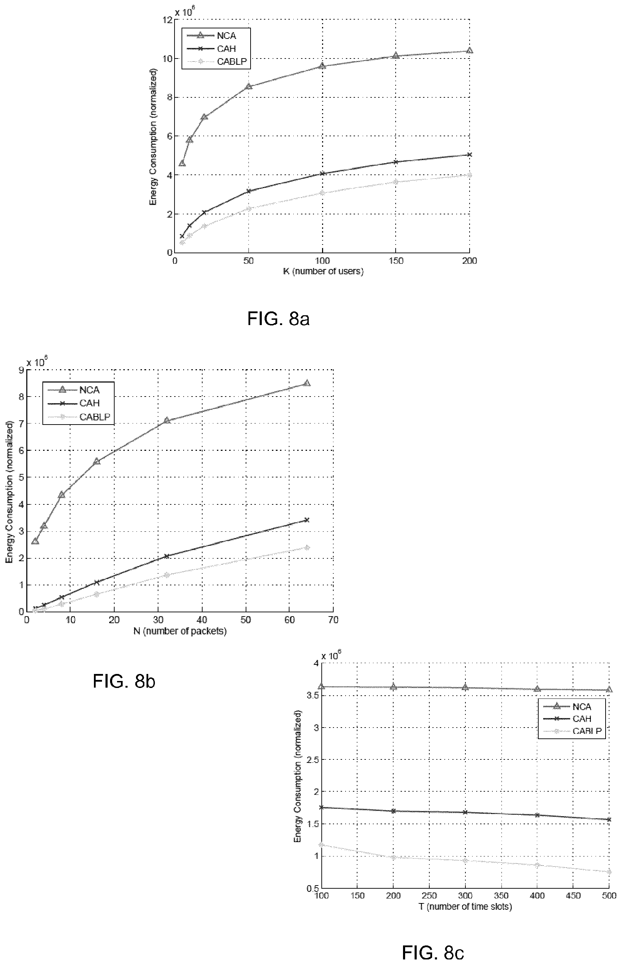

Referring to figures FIG. 8a, FIG. 8b, FIG. 8c, graphs of broadcast energy consumption according to embodiments of the invention are depicted.

In a non limiting example, the performances of embodiments of the invention are compared to standard method from the art, referenced by non context aware (NCA) scheme on the respective figures FIG. 8a, FIG. 8b, and FIG. 8c.

On said figures, the performances of a first embodiment of the invention using the Context Aware Binary Linear Programming method combined with an embodiment of Random Linear Network Coding (RLNC) scheme is depicted as the CALBP curves comprises segments linked with star symbols.

On said figures, the performances of a second embodiment of the invention using the Context Aware Heuristic method combined with an embodiment of Random Linear Network Coding (RLNC) scheme is depicted as the CAH curves comprising segments linked with cross symbols.

On said figures, the performances of the standard method, the non context aware method is depicted as the NCA curves comprising segments linked with triangle symbols.

Referring to figure FIG. 8a, performances of the embodiments of the invention and the standard method are compared with a varying number of user equipments UE in the following conditions:

- the number of elements in the set of time slots TSj is 300,
- the number of elements in the set of data packets DPk is 32,
- the number of elements in the plurality of user equipments K varies on the x-axis.

The y-axis refers to the energy consumption in a normalized representation. The energy consumption is closely linked to the determined broadcast transmit power BP.

For a number of user equipments UEi equals to 5, the embodiments of Context Aware Binary Linear Programming and Context Aware Heuristic methods are respectively up to 88% and 81% more energy efficient than the standard method symbolized by the NCA curve.

For a number of user equipments UEi equals to 200, the embodiments of Context Aware Binary Linear Programming and Context Aware Heuristic methods are respectively up to 61% and 51% more energy efficient than the standard method symbolized by the NCA curve.

Referring to figure FIG. 8b, performances of the embodiments of the invention and the standard method are compared with a varying number of data packets DPk in the following conditions:

- the number of elements in the set of time slots TSj is 300,
- the number of elements in the plurality of user equipments UEi is 20,
- the number of elements in set of data packets varies on the x-axis.

For a number of data packets equals to 2, the embodiments of Context Aware Binary Linear Programming and Context Aware Heuristic methods are respectively up to 98% and 96% more energy efficient than the standard method symbolized by the NCA curve.

For a number of data packets equals to 64, the embodiments of Context Aware Binary Linear Programming and Context Aware Heuristic methods are respectively up to 72% and 60% more energy efficient than the standard method symbolized by the NCA curve.

Referring to figure FIG. 8c, performances of the embodiments of the invention and the standard method are compared with a varying number of time slots TSj, whereas the number of data packets DPk is fixed, and the number of user equipments UEi is fixed.

The embodiments of Context Aware Binary Linear Programming and Context Aware Heuristic methods are more energy efficient than the standard method symbolized by the NCA curve. Moreover, high number of time slots TSj for broadcasting allows reducing the energy consumption with the Context Aware Binary Linear Programming and Context Aware Heuristic methods. Both methods provide minimization of the broadcast transmit power BP over the set of time slots TSj, wherein a high number of time slots TSj offers more opportunities of minimization.

The present embodiments of the invention offer method and broadcast cellular system BSC for allocating radio resources RR. The method uses different steps for determining user's contexts UCi of user equipments UEi registered to the broadcast services offered by the broadcast cellular system BCS. The user's contexts UCi allow to determine the required transmit powers TPi for ensuring that the data packets to be broadcasted successfully reach the user equipments UEi. It advantageously reduces the risk of retransmission or repetition of ARQ mechanism that impact efficiency of broadcasting systems. The steps of determining the eligible set of user equipments UEi by selecting said user equipments UEi according to their respective transmit powers TPi allow controlling the broadcast transmit power BP for broadcasting the data packets DPk. Advantageously said controlling allows fine tuning the broadcast transmit power as a function of the respective radio conditions of the user equipments UEi. The broadcast system cellular system BCS is then enabled to adapt over time to the radio events happening in the one radio cell or several radio cells it broadcasts into. Said control is useful in terms of energy consumption. Advantageously the broadcast cellular system BCS may reduce broadcast transmit power BP when all user equipments UEi are in near cell conditions for example. The adaptation of the broadcast transmit power allow a fine control of the energy consumption, which is advantageous over existing systems that use a worst case scenario implying a high and maladjusted broadcast transmit power, which is not energy consumption efficient.

The functions of the various elements shown in the FIGs., including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

## Claims

1. A method for allocating radio resources (RR) by a broadcast cellular system (BCS), said broadcast cellular system (BCS) communicating with a plurality of user equipments (UE1,UE2,UE3) and broadcasting a set of data packets (DP1,DP2,DP3,DP4) over a set of time slots, TSj, the method comprises method comprises:

- for each user equipment (UE1,UE2,UE3) from the plurality of user equipments

  ∘ determining (S1) a user's context (S1) representative of radio conditions experienced by said user equipment **characterized in that** the method further comprises, for each user equipment (UE1,UE2,UE3) from the plurality of user equipments
  ∘ determining (S3) from the user's context a transmit power (TP1,TP2,TP3) for sending from the broadcast cellular system (BCS) one data packet (DP1,DP2,DP3,DP4) from the set of data packets

- for at least one time slot (TS1,TS2,TS3,TS4,TS5,TS6) from the set of time slots

  o determining (S5) an eligible set of user equipments from the plurality of user equipments user equipments from said eligible set being selected (S51) according to their respective transmit powers (TP1,TP2,TP3) said respective transmit powers (TPi) controlling (S7) a broadcast transmit power (BP) for the broadcasting cellular system (BCS) to broadcast in said time slot the one data packet (DP1,DP2,DP3,DP4) from the set of data packet the broadcast transmit power (BP) being greater than or equal to the respective transmit powers from each user equipment from said eligible set,
  o allocating (S9) in said time slot the broadcast transmit power (BP), for broadcasting the one data packet to the eligible set of user equipments (UE1, UE2, UE3).

2. A method according to claim 1, wherein the step of determining (S3) from the user's context the transmit power is determining the transmit power for achieving a signal to noise ratio on the user equipment (UE1,UE2,UE3) greater than or equal to a threshold.

3. A method according to any of the claims 1 to 2, wherein the step of determining (S5) the eligible set of user equipments further comprises a step of selecting (S53) user equipments from the plurality of user equipments (UE1,UE2,UE3) that have respectively received a number of data packets inferior to the total number of data packets (DPk) comprised in the set of data packets.

4. A method according to any of the claims 1 to 3, wherein the broadcasting of the set of data packets uses a "Xor" network coding scheme, and/or random linear network coding scheme, and/or deterministic linear network coding scheme.

5. A method according to any of the claims 1 to 4, wherein the broadcasting from the broadcast cellular system (BCS) is performed in at least a radio cell (C1, C2) comprising the plurality of user equipments (UE1,UE2,UE3).

6. A method according to any of the claims 1 to 4, wherein the broadcasting from the broadcast cellular system (BCS) is performed in a plurality of radio cells the plurality of user equipments being distributed amongst the plurality of radio cells.

7. A method according to claim any of the claims 1 to 6, wherein the user's context is determined (S1) according to a feedback provided by corresponding user equipment.

8. A method according to claim 7, wherein the user's context is determined (S11) regularly according to the feedback provided regularly by the user equipment.

9. A method according to claim 7, wherein the user's context is determined (S13) regularly according to a correlated fading model.

10. A method according to claim any of the claims 1 to 9, wherein the step of determining (S5) the set of eligible user equipments (UE1,UE2,UE3) further comprises a step of minimizing (S55) the broadcast transmit power (BP), for broadcasting the one data packet to said eligible set of user equipments.

11. A method according to claim 10, wherein the step of minimizing (S55) the broadcast transmit power (BP) minimizes the broadcast transmit power (BP) according to a Context Aware Binary Linear Programming "CABLP" method comprising the following steps:

  - determining a set of constraints comprising:

◦ a first constraint related to the number of data packets respectively received by each user equipment from the plurality of user equipments for determining the eligible set of user equipments,

◦ a second constraint related to the ordering of the respective transmit powers from the user equipments from the eligible set of user equipments,

- determining an ordered weight matrix $\omega$ wherein each element of said ordered weight matrix $\omega$ is determined according to the third constraint and is representative of respectively two transmit powers from two user equipments from the eligible set of user equipments,
- determining the minimum broadcast transmit power (BP) according to the result of the applying of the first constraint to each element of the ordered weight matrix $\omega$ and according to a binary linear programming method.

**12.** A method according to claim 10, wherein the step of minimizing (S55) the broadcast transmit power (BP) minimizes the broadcast transmit power (BP) according to a Context Aware Heuristic "CAH" method comprising the following steps:

- for each time slot from the set of tome slots, determining the eligible set of user equipments
- determining a sub-set of time slots from the set of time slots by selecting respective time slots for which the numbers of user of equipments from the determined eligible sets of user equipments are maximum,
- selecting one time slot from the sub-set of time slots said one time slot requiring the minimum broadcast transmit power (BP),
- assigning in said selected one time slot the minimum broadcast transmit power (BP), for controlling (S7) the broadcast transmit power.

**13.** A broadcast cellular system (BCS) for allocating radio resources (RR), said broadcast cellular system (BCS) communicating with a plurality of user equipments (UE1,UE2,UE3) and broadcasting a set of data packets (DP1,DP2, DP3,DP4) over a set of time slots (TS1,TS2,TS3,TS4,TS5,TS6) said broadcast cellular system (BCS) comprises:

- a user's context monitoring module (UM), for monitoring radio conditions experienced by user equipments (UE1,UE2,UE3) from the plurality of user equipments **characterized in that** said brosdcast cellular system (BCS) comprises
- a transmit power module (TM), for determining for each user equipment (UE1,UE2,UE3) from the plurality of user equipments a respective transmit power (TP1,TP2,TP3) for sending from the broadcast cellular system (BCS) one data packet (DP1,DP2,DP3,DP4) from the set of data packets,
- a selection module (SM) for determining an eligible set of user equipments (UE1,UE2,UE3) from the plurality of user equipments, user equipments from said eligible set being selected according to their respective transmit powers (TP1,TP2,TP3) said respective transmit powers controlling a broadcast transmit power for the broadcasting cellular system (BCS) to broadcast in said time slot (TS1,TS2,TS3,TS4,TS5,TS6) the one data packet (DP1,DP2,DP3,DP4) from the set of data packet, the broadcast transmit power (BP) being greater than or equal to the respective transmit powers from each user equipment from said eligible set,
- an allocator module (AM) for allocating the broadcast transmit power (BP), for broadcasting the one data packet to the eligible set of user equipments in a time slot from the set of time slots.

**14.** A broadcast cellular system (BCS) according to claim 13, wherein the broadcast cellular system (BCS) communicates to the plurality of user equipments said plurality of user equipments being comprised in at least a radio cell (C1,C2).

**15.** A broadcast cellular system (BCS) according to claim 13, wherein the broadcast cellular system (BCS) communicates to the plurality of user equipments, said plurality of user equipments being distributed among a plurality of radio cells.

**Patentansprüche**

**1.** Verfahren zum Zuweisen von Funkressourcen (RR) durch ein zellulares Broadcast-System (BCS), wobei besagtes zellulares Broadcast-System (BCS) mit einer Vielzahl von Teilnehmergeräten (UE1, UE2, UE3) kommuniziert und einen Satz von Datenpaketen (DP1, DP2, DP3, DP4) über einen Satz von Zeitschlitzen, TSj, rundsendet, wobei das Verfahren umfasst:

- für jedes Teilnehmergerät (UE1, UE2, UE3) von der Vielzahl von Teilnehmergeräten

∘ Bestimmen (S1) eines Teilnehmerkontextes (S1), der repräsentativ ist für die Funkbedingungen, die von besagtem Teilnehmergerät festgestellt wurden, **dadurch gekennzeichnet, dass** das Verfahren weiterhin umfasst, für jedes Teilnehmergerät (UE1, UE2, UE3) von der Vielzahl von Teilnehmergeräten
∘ Bestimmen (S3) aus dem Teilnehmerkontext einer Sendeleistung (TP1, TP2, TP3) zum Senden von dem zellularen Broadcast-System (BCS) eines Datenpakets (DP1, DP2, DP3, DP4) von dem Satz von Datenpaketen

- für mindestens einen Zeitschlitz (TS1, TS2, TS3, TS4, TS5, TS6) von dem Satz von Zeitschlitzen

∘ Bestimmen (S5) eines wählbaren Satzes von Teilnehmergeräten aus der Vielzahl von Teilnehmergeräten aus besagtem wählbarem Satz, die ausgewählt werden (S51) gemäß ihrer entsprechenden Sendeleistungen (TP1, TP2, TP3), wobei besagte Sendeleistungen eine Broadcast-Sendeleistung (BP) kontrollieren (S7) für das zellulare Broadcasting-System (BCS), um in besagtem Zeitschlitz das eine Datenpaket (DP1, DP2, DP3, DP4) von dem Satz von Datenpaketen rundzusenden, wobei die Broadcast-Sendeleistung (BP) größer als die entsprechenden Sendeleistungen von jedem Teilnehmergerät von besagtem wählbaren Satz oder gleich sind,
∘ Zuweisen (S9) in besagtem Zeitschlitz der Broadcast-Sendeleistung (BP) zum Rundsenden des einen Datenpakets zum wählbaren Satz von Teilnehmergeräten (UE1, UE2, UE3).

2. Verfahren nach Anspruch 1, wobei der Schritt des Bestimmens (S3) aus dem Teilnehmerkontext der Sendeleistung die Sendeleistung bestimmt zum Erzielen eines Rauschverhältnisses am Teilnehmergerät (UE1, UE2, UE3), das größer als ein Schwellenwert oder gleich ist.

3. Verfahren nach einem beliebigen der Ansprüche 1 bis 2, wobei der Schritt des Bestimmens (S5) des wählbaren Satzes von Teilnehmergeräten weiterhin umfasst einen Schritt des Auswählens (S53) von Teilnehmergeräten aus der Vielzahl von Teilnehmergeräten (UE1, UE2, UE3), die entsprechend eine Anzahl von Datenpaketen empfangen haben, die kleiner ist als die Gesamtzahl von Datenpaketen (DPk), die in dem Satz von Datenpaketen umfasst sind.

4. Verfahren nach einem beliebigen der Ansprüche 1 bis 3, wobei das Rundsenden des Satzes von Datenpaketen ein "Xor"-Netzwerk-Codierschema verwendet, und/oder ein randomisiertes lineares Netzwerk-Codierschema, und/oder ein deterministisches lineares Netzwerk-Codierschema.

5. Verfahren nach einem beliebigen der Ansprüche 1 bis 4, wobei das Rundsenden vom zellularen Broadcast-System (BCS) durchgeführt wird in mindestens einer Funkzelle (C1, C2), welche die Vielzahl von Teilnehmergeräten (UE1, UE2, UE3) umfasst.

6. Verfahren nach einem beliebigen der Ansprüche 1 bis 4, wobei das Rundsenden vom zellularen Broadcast-System (BCS) durchgeführt wird in einer Vielzahl von Funkzellen, wobei die Vielzahl von Teilnehmergeräten verteilt ist auf die Vielzahl von Funkzellen.

7. Verfahren nach einem beliebigen der Ansprüche 1 bis 6, wobei der Teilnehmerkontext bestimmt (S1) wird gemäß einem Feedback, das von einem entsprechenden Teilnehmergerät bereitgestellt wird.

8. Verfahren nach Anspruch 7, wobei der Teilnehmerkontext regelmäßig bestimmt (S11) wird gemäß dem Feedback, das regelmäßig vom Teilnehmergerät bereitgestellt wird.

9. Verfahren nach Anspruch 7, wobei der Teilnehmerkontext regelmäßig bestimmt (S13) wird gemäß einem korrelierten Fading-Modell.

10. Verfahren nach einem beliebigen der Ansprüche 1 bis 9, wobei der Schritt des Bestimmens (S5) des Satzes wählbarer Teilnehmergeräte (UE1, UE2, UE3) weiterhin umfasst einen Schritt des Minimierens (S55) der Broadcast-Sendeleistung (BP) zum Rundsenden des einen Datenpakets zu besagtem wählbaren Satz von Teilnehmergeräten.

11. Verfahren nach Anspruch 10, wobei der Schritt des Minimierens (S55) der Broadcast-Sendeleistung (BP) die Broadcast-Sendeleistung (BP) gemäß eines linearen binären Context-Aware-Programmierungsverfahrens "CABLP" minimiert, das die folgenden Schritte umfasst:

- Bestimmen eines Satzes von Einschränkungen, umfassend:

∘ eine erste Einschränkung in Bezug auf die Anzahl von Datenpaketen, die jeweils von jedem Teilnehmergerät von der Vielzahl von Teilnehmergeräten empfangen werden zum Bestimmen des wählbaren Satzes von Teilnehmergeräten,
∘ eine zweite Einschränkung in Bezug auf das Ordnen der entsprechenden Sendeleistungen von den Teilnehmergeräten aus dem wählbaren Satz von Teilnehmergeräten,

- Bestimmen einer geordneten Gewichtsmatrix $\omega$, wobei jedes Element besagter geordneten Gewichtsmatrix $\omega$ bestimmt wird gemäß der dritten Einschränkung und repräsentativ ist für entsprechende zwei Sendeleistungen von zwei Teilnehmergeräten aus dem wählbaren Satz von Teilnehmergeräten,
- Bestimmen der minimalen Broadcast-Sendeleistung (BP) gemäß dem Ergebnis der Anwendung der ersten Einschränkung auf jedes Element der geordneten Gewichtsmatrix $\omega$ und gemäß eines binären linearen Programmierungsverfahrens.

**12.** Verfahren nach Anspruch 10, wobei der Schritt des Minimierens (S55) der Broadcast-Sendeleistung (BP) die Broadcast-Sendeleistung (BP) gemäß eines heuristischen Context-Aware-Verfahrens "CAH" minimiert, das die folgenden Schritte umfasst:

- für jeden Zeitschlitz aus dem Satz von Zeitschlitzen Bestimmen des wählbaren Satzes von Teilnehmergeräten,
- Bestimmen eines Untersatzes von Zeitschlitzen aus dem Satz von Zeitschlitzen durch Auswählen entsprechender Zeitschlitze, für die die Anzahlen von Teilnehmergeräten aus den bestimmten wählbaren Sätzen von Teilnehmergeräten maximal sind,
- Auswählen eines Zeitschlitzes aus dem Untersatz von Zeitschlitzen, wobei besagter einer Zeitschlitz die minimale Broadcast-Sendeleistung (BP) benötigt,
- Zuweisen in besagtem ausgewählten einen Zeitschlitz der minimalen Broadcast-Sendeleistung (BP) zum Steuern (S7) der Broadcast-Sendeleistung.

**13.** Zellulares Broadcast-System (BCS) zum Zuweisen von Funkressourcen (RR), wobei besagtes zellulares Broadcast-System (BCS) mit einer Vielzahl von Teilnehmergeräten (UE1, UE2, UE3) kommuniziert und einen Satz von Datenpaketen (DP1, DP2, DP3, DP4) über einen Satz von Zeitschlitzen (TS1, TS2, TS3, TS4, TS5, TS6) rundsendet, wobei besagtes zellulares Broadcast-System (BCS) umfasst:

- ein Teilnehmerkontext-Überwachungsmodul (UM) zum Überwachen der Funkbedingungen, die von den Teilnehmergeräten (UE1, UE2, UE3) von der Vielzahl von Teilnehmergeräten festgestellt werden,
**dadurch gekennzeichnet, dass** besagtes zellulares Broadcast-System (BCS) umfasst:
- ein Sendeleistungsmodul (TM) zum Bestimmen für jedes Teilnehmergerät (UE1, UE2, UE3) aus der Vielzahl von Teilnehmergeräten einer entsprechenden Sendeleistung (TP1, TP2, TP3) zum Senden vom zellularen Broadcast-System (BCS) eines Datenpakets (DP1, DP2, DP3, DP4) aus dem Satz von Datenpaketen
- ein Auswahlmodul (SM) zum Bestimmen eines wählbaren Satzes von Teilnehmergeräten (UE1, UE2, UE3) aus der Vielzahl von Teilnehmergeräten aus besagtem wählbaren Satz, die gemäß ihrer entsprechenden Sendeleistungen (TP1, TP2, TP3) ausgewählt werden, wobei die entsprechenden Sendeleistungen eine Broadcast-Sendeleistung für das zellulare Broadcasting-System (BCS) steuern, um in besagtem Zeitschlitz (TS1, TS2, TS3, TS4, TS5, TS6) das eine Datenpaket (DP1, DP2, DP3, DP4) aus dem Satz von Datenpaketen rundzusenden, wobei die Broadcast-Sendeleistung (BP) größer als die entsprechenden Sendeleistungen von jedem Teilnehmergerät aus besagtem wählbarem Satz oder gleich sind,
- ein Zuweismodul (AM) zum Zuweisen der Broadcast-Sendeleistung (BP) zum Rundsenden des einen Datenpakets zum wählbaren Satz von Teilnehmergeräten in einem Zeitschlitz aus dem Satz von Zeitschlitzen.

**14.** Zellulares Broadcast-System (BCS) nach Anspruch 13, wobei das zellulare Broadcast-System (BCS) mit der Vielzahl von Teilnehmergeräten kommuniziert,
wobei besagte Vielzahl von Teilnehmergeräten in mindestens einer Funkzelle (C1, C2) umfasst ist.

**15.** Zellulares Broadcast-System (BCS) nach Anspruch 13, wobei das zellulare Broadcast-System (BCS) mit der Vielzahl von Teilnehmergeräten kommuniziert, wobei besagte Vielzahl von Teilnehmergeräten auf eine Vielzahl von Funkzellen verteilt ist.

**EP 2 999 281 B1**

**Revendications**

1. Procédé d'allocation de ressources radio (RR) au moyen d'un système de diffusion cellulaire (BCS), ledit système de diffusion cellulaire (BCS) communiquant avec une pluralité d'équipements utilisateur (UE1, UE2, UE3) et diffusant un ensemble de paquets de données (DP1, DP2, DP3, DP4) sur un ensemble de créneaux temporels, TSj, le procédé comprenant l'étape suivante :

   - pour chaque équipement utilisateur (UE1, UE2, UE3) parmi la pluralité d'équipements utilisateur

      ◦ déterminer (S1) un contexte d'utilisateur (S1) représentatif de conditions radio subies par ledit équipement utilisateur **caractérisé en ce que** le procédé comprend en outre les étapes suivantes, pour chaque équipement utilisateur (UE1, UE2, UE3) parmi la pluralité d'équipements utilisateur
      ◦ déterminer (S3) à partir du contexte d'utilisateur une puissance d'émission (TP1, TP2, TP3) pour envoyer à partir du système de diffusion cellulaire (BCS) un paquet de données (DP1, DP2, DP3, DP4) parmi ledit ensemble de paquets de données

   - pour au moins un créneau temporel (TS1, TS2, TS3, TS4, TS5, TS6) parmi l'ensemble de créneaux temporels

      ◦ déterminer (S5) un ensemble éligible d'équipements utilisateur à partir de la pluralité d'équipements utilisateur parmi ledit ensemble éligible sélectionnés (S51) conformément à leurs puissances d'émission respectives (TP1, TP2, TP3)
      ◦ lesdites puissances d'émission respectives contrôlant (S7) une puissance d'émission de diffusion (BP) pour le système de diffusion cellulaire (BCS) afin de diffuser dans ledit créneau temporel le paquet de données (DP1, DP2, DP3, DP4) parmi l'ensemble de paquets de données, la puissance d'émission de diffusion (BP) étant supérieure ou égale aux puissances d'émission respectives de chaque équipement utilisateur parmi ledit ensemble éligible,
      ◦ allouer (S9) dans ledit créneau temporel, la puissance d'émission de diffusion (BP), pour diffuser le paquet de données à l'ensemble éligible d'équipements utilisateur (UE1, UE2, UE3).

2. Procédé selon la revendication 1, dans lequel l'étape de détermination (S3) à partir du contexte de l'utilisateur de la puissance d'émission détermine la puissance d'émission pour obtenir un rapport signal sur bruit sur l'équipement utilisateur (UE1, UE2, UE3) supérieur ou égal à un seuil.

3. Procédé selon l'une quelconque des revendications 1 et 2, dans lequel l'étape de détermination (S5) de l'ensemble éligible d'équipements utilisateur comprend en outre une étape de sélection (S53) d'équipements utilisateur parmi la pluralité d'équipements utilisateur (UE1, UE2, UE3) qui ont respectivement reçu un nombre de paquets de données inférieur au nombre total de paquets de données (DPk) compris dans l'ensemble de paquets de données.

4. Procédé selon l'une quelconque des revendications 1 à 3, dans lequel la diffusion de l'ensemble de paquets de données utilise un schéma de codage de réseau « OU exclusif », et/ou un schéma de codage de réseau linéaire aléatoire, et/ou un schéma de codage de réseau linéaire déterministe.

5. Procédé selon l'une quelconque des revendications 1 à 4, dans lequel la diffusion à partir du système de diffusion cellulaire (BCS) est effectuée dans au moins une cellule radio (C1, C2) comprenant la pluralité d'équipements utilisateur (UE1, UE2, UE3).

6. Procédé selon l'une quelconque des revendications 1 à 4, dans lequel la diffusion à partir du système de diffusion cellulaire (BCS) est effectuée dans une pluralité de cellules radio, la pluralité d'équipements utilisateur étant répartie parmi la pluralité de cellules radio.

7. Procédé selon l'une quelconque des revendications 1 à 6, dans lequel le contexte de l'utilisateur est déterminé (S1) conformément à un retour d'information fourni par un équipement utilisateur correspondant.

8. Procédé selon la revendication 7, dans lequel le contexte de l'utilisateur est déterminé (S11) régulièrement conformément au retour d'information fourni régulièrement par l'équipement utilisateur.

9. Procédé selon la revendication 7, dans lequel le contexte de l'utilisateur est déterminé (S13) régulièrement conformément à un modèle d'évanouissement corrélé.

**10.** Procédé selon l'une quelconque des revendications 1 à 9, dans lequel l'étape de détermination (S5) de l'ensemble d'équipements utilisateur éligibles (UE1, UE2, UE3) comprend en outre une étape de minimisation (S55) de la puissance d'émission de diffusion (BP), pour diffuser le paquet de données audit ensemble éligible d'équipements utilisateur.

**11.** Procédé selon la revendication 10, dans lequel l'étape de minimisation (S55) de la puissance d'émission de diffusion (BP) réduit au minimum la puissance d'émission de diffusion (BP) conformément à un procédé de programmation linéaire binaire sensible au contexte « CABLP » comprenant les étapes suivantes :

- déterminer un ensemble de contraintes comprenant :

○ une première contrainte relative au nombre de paquets de données respectivement reçus par chaque équipement utilisateur parmi la pluralité d'équipements utilisateur pour déterminer l'ensemble éligible d'équipements utilisateur,
○ une deuxième contrainte relative au classement des puissances d'émission respectives des équipements utilisateur parmi l'ensemble éligible d'équipements utilisateur,

- déterminer une matrice de poids ordonnée ω dans lequel chaque élément de ladite matrice de poids ordonnée ω est déterminé conformément à la troisième contrainte et est représentatif respectivement de deux puissances d'émission de deux équipements utilisateur parmi l'ensemble éligible d'équipements utilisateur,
- déterminer la puissance d'émission de diffusion minimum (BP) conformément au résultat de l'application de la première contrainte à chaque élément de la matrice de poids ordonnée ω et conformément à un procédé de programmation linéaire binaire.

**12.** Procédé selon la revendication 10, dans lequel l'étape de minimisation (S55) de la puissance d'émission de diffusion (BP) réduit au minimum la puissance d'émission de diffusion (BP) conformément à un procédé heuristique sensible au contexte « CAH » comprenant les étapes suivantes :

- pour chaque créneau temporel parmi l'ensemble de créneaux temporels, déterminer l'ensemble éligible d'équipements utilisateur
- déterminer un sous-ensemble de créneaux temporels parmi l'ensemble de créneaux temporels en sélectionnant des créneaux temporels respectifs pour lesquels les nombres d'utilisateurs d'équipements parmi les ensembles éligibles déterminés d'équipements utilisateur sont des valeurs maximum,
- sélectionner un créneau temporel parmi le sous-ensemble de créneaux temporels, ledit créneau temporel nécessitant la puissance d'émission de diffusion minimum (BP),
- attribuer dans ledit créneau temporel sélectionné la puissance d'émission de diffusion minimum (BP), pour contrôler (S7) la puissance d'émission de diffusion.

**13.** Système de diffusion cellulaire (BCS) pour allouer des ressources radio (RR), ledit système de diffusion cellulaire (BCS) communiquant avec une pluralité d'équipements utilisateur (UE1, UE2, UE3) et diffusant un ensemble de paquets de données (DP1, DP2, DP3, DP4) sur un ensemble de créneaux temporels (TS1, TS2, TS3, TS4, TS5, TS6) ledit système de diffusion cellulaire (BCS) comprenant :

- un module de surveillance du contexte de l'utilisateur (UM), pour surveiller des conditions radio subies par des équipements utilisateur (UE1, UE2, UE3) parmi la pluralité d'équipements utilisateur **caractérisé en ce que** ledit système de diffusion cellulaire (BCS) comprend
- un module de puissance d'émission (TM), pour déterminer pour chaque équipement utilisateur (UE1, UE2, UE3) parmi la pluralité d'équipements utilisateur une puissance d'émission respective (TP1, TP2, TP3) pour envoyer à partir du système de diffusion cellulaire (BCS) un paquet de données (DP1, DP2, DP3, DP4) parmi l'ensemble de paquets de données,
- un module de sélection (SM) pour déterminer un ensemble éligible d'équipements utilisateur (UE1, UE2, UE3) parmi la pluralité d'équipements utilisateur, des équipements utilisateur parmi ledit ensemble éligible étant sélectionnés conformément à leurs puissances d'émission respectives (TP1, TP2, TP3) lesdites puissances d'émission respectives contrôlant une puissance d'émission de diffusion pour le système de diffusion cellulaire (BCS) afin de diffuser dans ledit créneau temporel (TS1, TS2, TS3, TS4, TS5, TS6) le paquet de données (DP1, DP2, DP3, DP4) parmi l'ensemble de paquets de données, la puissance d'émission de diffusion (BP) étant supérieure ou égale aux puissances d'émission respectives de chaque équipement utilisateur parmi ledit ensemble éligible,

- un module d'allocation (AM) pour allouer la puissance d'émission de diffusion (BP), afin de diffuser le paquet de données à l'ensemble éligible d'équipements utilisateur dans un créneau temporel parmi l'ensemble de créneaux temporels.

14. Système de diffusion cellulaire (BCS) selon la revendication 13, dans lequel le système de diffusion cellulaire (BCS) communique à la pluralité d'équipements utilisateur ladite pluralité d'équipements utilisateur compris dans au moins une cellule radio (C1, C2).

15. Système de diffusion cellulaire (BCS) selon la revendication 13, dans lequel le système de diffusion cellulaire (BCS) communique avec la pluralité d'équipements utilisateur, ladite pluralité d'équipements utilisateur étant répartie parmi une pluralité de cellules radio.

C1

UE1

A1

UE3

BCS

L1

UE2

FIG. 1

C1

C2

UE1

UE4

A1

A2

UE3

UE5

BCS

L1

L2

UE2

FIG. 2

BCS

IF

SM

TM

UM

BP

TP1

TP2

UC1

UC2

BF

AM

TP3

UC3

FIG. 3

C

BF

DP1

DP2

DP3

DP4

FIG. 4

RE

RR

RE3

RE2

RE1

TS1  TS2  TS3  TS4  TS5  TS6

T

FIG. 5

P

TP2

TP1

TP2

TP3  TP3

TP1

TP1

TP2  BP

TP3

TS1  TS3  TS5

T

FIG. 6

S1

Determining UCi → Determining regularly — S11

S3

Determining TPi → Determining according to a model — S13

S5

Determining UEi → Selecting UEi — S51

Selecting UEi — S53

S7

Controlling BP ← Minimizing BP — S55

S9

Allocating RR

FIG. 7

FIG. 8a

FIG. 8b

FIG. 8c

**EP 2 999 281 B1**

**REFERENCES CITED IN THE DESCRIPTION**

**Patent documents cited in the description**

- WO 2008079222 A